# EUROPÄISCHE PATENTANMELDUNG

(11) **EP 0 833 095 A2**
(43) Veröffentlichungstag der Anmeldung: **01.04.1998**
(21) Anmeldenummer: 97109719.1
(22) Anmeldetag: 14.06.1997
(51) Int. Cl.: F16L 55/027, F16K 47/08

(54) **Einrichtung zur differenzdruckabhängigen Steuerung eines Strömungskanals, insbesondere Wassermengenbegrenzer für Wassererhitzer**

(30) Priorität: 27.09.1996 DE 29616900 U
(71) Anmelder: ROBERT BOSCH GMBH, 70442 Stuttgart (DE)
(72) Erfinder: Starz, Friedrich, 73240 Wendlingen (DE); Lindemann, Uwe, 71088 Holzgerlingen (DE)

(57) **Zusammenfassung**

Die Erfindung betrifft eine Einrichtung zur differenzdruckabhängigen Steuerung eines Strömungskanals, insbesondere Wassermengenbegrenzer für Wassererhitzer, mit einem nachgeschalteten, in die Strömung eingesetzten Geräuschdämpfungsglied, welches die zentral eintretende Strömung gegen eine den Strömungskanal begrenzende Wand lenkt.

Es wird vorgeschlagen, daß das Geräuschdämpfungsglied (14) ein in einem gestreckten Abschnitt des Strömungskanals (12) einsetzbarer Hohlkörper ist, dessen stromab liegender Endabschnitt (20) einen kleineren Querschnitt als der Strömungskanal (12) hat, und mindestens eine Wandöffnung (24) aufweist, welche die Strömung gegen die Wand des gestreckten Abschnitts des Strömungskanals (12) lenkt. Diese Ausführung ist für Betriebsbereiche von 1 bis 10 bar geeignet und außerdem an unterschiedliche Betriebsbereiche leicht anpaßbar.

## Beschreibung

### Stand der Technik

Die Erfindung geht aus von einer Einrichtung zur differenzdruckabhängigen Steuerung eines Strömungskanals nach der Gattung des Hauptanspruchs. Bei einer bekannten Einrichtung dieser Gattung (DE-Gbm 89 14 647) ist das Geräuschdämpfungsglied als Lochscheibe ausgebildet, deren sich in Strömungsrichtung verengende, mit einem kreissegmentförmigen Querschnitt am Scheibenrand ausmündende Bohrung die Strömung insgesamt gegen eine senkrecht zur Lochscheibenachse stehende Wand lenkt, an der die Strömung aus der bisherigen Richtung um 90° umgelenkt wird. Diese Ausführung ist in gestreckten Strömungskänalen nicht verwendbar, und bedingt außerdem für jede Steueraufgabe eine Sonderausführung der Lochscheibe, wenn die Strömungsgeräusche unterhalb eines vorgegebenen Pegels bleiben sollen.

### Vorteile der Erfindung

Der Erfindung liegt die Erkenntnis zugrunde, daß die Strömungsgeräusche in Wassermengenbegrenzern durch Kavitation verursacht sind und durch Drosselung der Strömung stromab des Wassermengenbegrenzers dann zufriedenstellend verringert bzw. beseitigt werden können, wenn das Ausmaß der nachfolgenden Drosselung auf den Wassermengen-Grenzwert abgestimmt wird. Die Anordnung nach dem Hauptanspruch hat den Vorteil, daß für Wassermengenbegrenzer mit unterschiedlichen Grenzwerten ein und derselbe Hohlkörper als nachgeschaltetes Geräuschdämpfungsglied verwendbar ist und zur Anpassung an den Grenzwert nur die Größe und/oder die Anzahl der Wandöffnungen im Hohlkörper variiert werden muß.

Durch die in den Unteransprüchen aufgeführten Merkmale sind vorteilhafte Weiterbildungen der Anordnung nach dem Hauptanspruch möglich.

Bei Anordnung von mehreren, über den Umfang des Hohlkörpers verteilten Wandöffnungen ergeben sich außer den mehrfachen Umlenkungen auch stärkere Verwirbelungen der Strömung im Ringraum zwischen Strömungskanal und Hohlkörper, wodurch sich auch eine stärkere Abhängigkeit der Drosselwirkung vom Zulaufdruck ergibt.

Diese Eigenschaft ist besonders wichtig und erwünscht bei Wassererhitzern, bei denen ein Wassermengenbegrenzer in einem großen Betriebsbereich, beispielsweise zwischen 1 und 10 bar einwandfrei, das heißt möglichst geräuschlos und die Regelwassermenge auch im unteren Zulaufdruckbereich einhaltend arbeiten soll. Um die Ausgestaltung des Geräuschdämpfungsglieds zu optimieren, wurde eine Grenzkurve ermittelt, welche die minimale notwendige Anhebung des Drucks nach dem Wassermengenbegrenzer aufzeigt, bei der gerade kein Geräusch entsteht. Das Geräuschdämpfungsglied muß eine Drosselung erwirken, die dem Niveau dieser Kurve entspricht.

Dieser Forderung wird erfindungsgemäß mit einem Geräuschdämpfungsglied Rechnung getragen, dessen Wandöffnungen in mindestens zwei, vorzugsweise drei Querschnittsebenen im stromab liegenden Endbereich des Geräuschdämpfungsglieds angeordnet sind. Bei dieser Ausführung ergeben sich auch Längswirbel um den Hohlkörper, die besonders stark vom Zulaufdruck des Wassermengenbegrenzers abhängig sind.

Die Arbeit des Installateurs kann erleichtert werden, wenn das Geräuschdämpfungsglied mit der die Strömung differenzdruckabhängig steuernden Baugruppe zu einer gemeinsam in einen Strömungskanal einsetzbaren Baueinheit verbindhar ist.

### Zeichnung

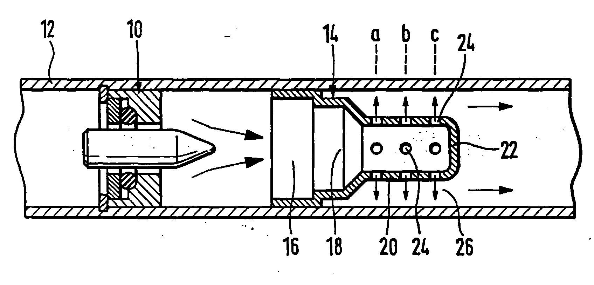

Ein Ausführungsbeispiel der Erfindung ist in der Zeichnung dargestellt und in der nachfolgenden Beschreibung näher erläutert. Die einzige Figur zeigt einen Längsschnitt durch einen Wassermengenbegrenzer eines Wassererhitzers mit nachgeschaltetem Geräuschdämpfungsglied.

### Beschreibung des Ausführungsbeispiels

Ein insgesamt mit der Bezugszahl 10 bezeichneter, in ein Wasserrohr 12 eingesetzter Wassermengenbegrenzer steuert den Wasserdurchfluß nach Maßgabe der Differenz der Drücke, die vor und hinter dem Wassermengenbegrenzer 10 herrschen. Einrichtungen mit dieser Funktion sind bekannt, so daß das hier dargestellte Ausführungsbeispiel eines Wassermengenbegrenzers nicht näher beschrieben ist. Stromab des Wassermengenbegrenzers 10 ist in das Wasserrohr 12 ein Geräuschdämpfungsglied 14 eingebaut, welches den Druck stromab des Wassermengenbegrenzers 10 anhebt und dadurch das Strömungsgeräusch auch bei höheren Zulaufdrücken mindert.

Das Geräuschdämpfungsglied 14 ist als ein zylindrischer Hohlkörper ausgebildet, dessen stromauf liegender Endabschnitt 16 den Querschnitt des Wasserrohres 12 passend ausfüllt. Der Endabschnitt 16 ist über einen sich kegelig verjüngenden mittleren Abschnitt 18 mit einem stromab liegenden Endabschnitt 20 verbunden, der einen kleineren Durchmesser als das Wasserrohr 12 hat und durch eine Stirnwand 22 abgeschlossen ist. In der Umfangswand des Endabschnitts 20 sind in drei Querschnittsebenen a, b, c je ein Kranz von Wandöffnungen 24 vorgesehen, durch welche die zentral in das Geräuschdämpfungsglied 14 eintretende Strömung umfangssymmetrisch geteilt gegen die Wand des Wasserrohres 12 gezwungen und dort erneut in dessen Längsrichtung umgelenkt wird.

Zwischen dem stromab liegenden Endabschnitt 20 des Geräuschdämpfungsglieds 14 und der Wand des Wasserrohres 12 ist ein Ringraum 26 gebildet, in welchem sich außer den Umlenkungen auch längsgerichtete Verwirbelungen der Strömung ergeben, die mit zunehmendem Zulaufdruck die Drosselwirkung des Geräuschdämpfungsglieds 14 erhöhen. Das ermöglicht es, das Geräuschdämpfungsglied 14 so auszulegen und zu bemessen, daß es über einen bei Wassererhitzern vorkommenden Betriebsbereich von 1 bis 10 bar einwandfrei arbeitet, das heißt den Druck jeweils nur soweit anhebt, daß gerade keine Strömungsgeräusche entstehen und daß auch im unteren Zulaufdruckbereich die vorgegebenen Wassermengenforderungen eingehalten werden.

## Patentansprüche

1. Einrichtung zur differenzdruckabhängigen Steuerung eines Strömungskanals, insbesondere Wassermengenbegrenzer für Wassererhitzer, mit einem nachgeschalteten, in die Strömung eingesetzten Geräuschdämpfungsglied, welches die eintretende Strömung gegen eine den Strömungskanal begrenzende Wand lenkt, dadurch gekennzeichnet, daß das Geräuschdämpfungsglied (14) ein in einem gestreckten Abschnitt des Strömungskanals (12) einsetzbarer Hohlkörper ist, dessen stromab liegender Endabschnitt (20) einen kleineren Querschnitt als der Strömungskanal (12) hat und mindestens eine Wandöffnung (24) aufweist, welche die Strömung gegen die Wand des gestreckten Abschnitts des Strömungskanals (12) lenkt.

2. Strömungseinrichtung nach Anspruch 1, dadurch gekennzeichnet, daß mehrere Wandöffnungen (24) über den Umfang des stromab liegenden Endabschnitts (20) des Geräuschdämpfungsglieds (14) verteilt angeordnet sind.

3. Einrichtung nach Anspruch 2, dadurch gekennzeichnet, daß die Wandöffnungen (24) in mindestens zwei, vorzugsweise drei Querschnittsebenen (a, b, c) im stromab liegenden Endabschnitt (20) des Geräuschdämpfungsglieds (14) angeordnet sind.

4. Einrichtung nach einem der vorhergehenden Ansprüche, dadurch gekennzeichnet, daß das Geräuschdämpfungsglied mit der die Strömung differenzdruckabhängig steuernden Baugruppe zu einer gemeinsam in einen Strömungskanal einsetzbaren Baueinheit verbindbar ist.
